# FASCICULE DE BREVET EUROPEEN

(11) **EP 3 667 149 B1**
(45) Date de publication et mention de la délivrance du brevet: **11.09.2024**
(21) Numéro de dépôt: 19210801.7
(22) Date de dépôt: 21.11.2019
(51) Int. Cl.: F16M 11/00, F16M 13/00

(54) **DISPOSITIF DE SUPPORT D'UN ÉQUIPEMENT DE COMMUNICATION, COMPRENANT UNE PLURALITÉ DE MOYENS DE FIXATION**
HALTERUNGSVORRICHTUNG EINES KOMMUNIKATIONSGERÄTS, DAS EINE VIELZAHL VON BEFESTIGUNGSMITTELN UMFASST
DEVICE FOR SUPPORTING A COMMUNICATION DEVICE, COMPRISING A PLURALITY OF ATTACHMENT MEANS

(30) Priorité: 10.12.2018 FR 1872695
(43) Date de publication de la demande: 17.06.2020
(73) Titulaire: Sagemcom Energy & Telecom SAS, 92270 Bois-Colombes (FR)
(72) Inventeur: SERGY, Jérémie, 92500 Rueil Malmaison (FR); FORJA, Christian, 92500 Rueil Malmaison (FR)
(74) Mandataire: Cabinet Boettcher

(56) Documents cités:
- CN-U- 205 618 940
- US-B2- 9 157 575

## Description

L'invention concerne le domaine des dispositifs de support d'un équipement de communication, comprenant une pluralité de moyens de fixation.

### ARRIERE PLAN DE L'INVENTION

Certains compteurs électriques modernes comprennent des moyens de communication qui leur permettent de communiquer à distance avec un système d'information (SI) du distributeur d'énergie électrique ou du gestionnaire du réseau électrique.

Fréquemment, cette communication est réalisée via un concentrateur de données. Le concentrateur de données collecte des informations provenant d'une pluralité de compteurs électriques, et retransmet ces informations au système d'information. De même, le concentrateur de données acquiert des informations produites par le système d'information, et les retransmet aux compteurs électriques auxquels il est connecté.

Ces informations comprennent par exemple des données de consommation électrique, des données de tarification, des données de *monitoring* du compteur électrique, des ordres d'activation d'un organe de coupure intégré dans le compteur électrique, etc.

Les compteurs électriques communiquent par exemple avec le concentrateur de donnée en utilisant des signaux par courants porteurs en ligne. Le concentrateur de données est par exemple connecté au système d'information par des moyens de communication radiofréquences.

Il arrive fréquemment que la communication entre le concentrateur de données et le système d'information distant soit dégradée. La dégradation de la communication résulte par exemple d'une distance importante entre le concentrateur de données et la station de base radio du système d'information, ou bien d'un positionnement défavorable du concentrateur de données (situé(s) par exemple dans une cave).

### OBJET DE L'INVENTION

L'invention a pour objet d'améliorer, de manière simple et peu coûteuse, les communications entre deux équipements électriques éloignés, tels qu'un concentrateur de données et un système d'information distant.

### RESUME DE L'INVENTION

En vue de la réalisation de ce but, on propose un dispositif de support d'un équipement de communication, comportant un moyen de fixation d'équipement agencé pour fixer l'équipement de communication sur le dispositif de support, une pluralité de moyens de fixation de dispositif agencés chacun pour fixer le dispositif de support sur un dispositif d'accueil préexistant distinct, le moyen de fixation d'équipement et les moyens de fixation de dispositif étant agencés de sorte que, lorsque l'équipement de communication est fixé sur le dispositif de support grâce au moyen de fixation d'équipement et que le dispositif de support est fixé sur un dispositif d'accueil préexistant grâce à l'un des moyens de fixation de dispositif, l'équipement de communication est éloigné d'au moins une distance minimum prédéfinie du dispositif d'accueil préexistant.

Ainsi, pour améliorer les communications entre un concentrateur de données et le système d'information distant, on peut relier au concentrateur de données une antenne additionnelle fixée au dispositif de support.

Comme les moyens de fixation de dispositif sont, d'une part, multiples, et d'autre part, compatibles avec des dispositifs d'accueil préexistants, l'antenne peut être intégrée très facilement dans un coffret comprenant le concentrateur de données, ou bien fixée sur un mur (ou sur tout type de dispositif d'accueil préexistant), sans qu'il ne soit nécessaire de modifier le coffret ou le mur.

On améliore donc grâce au dispositif de support et à l'antenne les communications entre le concentrateur de données et le système d'information distant, sans modifier les dispositifs d'accueil préexistants et donc de manière simple et peu coûteuse. Un exemple d'un dispositif de support est divulgué par le document US9157575, Pei Xubo, publié le 13 10 2015.

On propose aussi un système de communication comprenant le dispositif de support qui vient d'être décrit et un équipement de communication.

On propose en outre un équipement électrique comprenant ce système de communication.

On propose aussi un procédé d'installation d'un équipement de communication sur un dispositif d'accueil préexistant, comprenant les étapes de :
- Fixer l'équipement de communication au dispositif de support selon l'une des revendications 1 à 9, en utilisant le moyen de fixation d'équipement du dispositif de support ;
- Fixer le dispositif de support au dispositif d'accueil préexistant, en utilisant l'un des moyens de fixation de dispositif du dispositif de support.

L'invention sera mieux comprise à la lumière de la description qui suit d'un mode de mise en œuvre particulier non limitatif de l'invention.

### BREVE DESCRIPTION DES DESSINS

Il sera fait référence aux dessins annexés, parmi lesquels :
[Fig. 1] la figure 1 est une vue en perspective, en regard d'une première face d'un corps principal, du dispositif de support selon l'invention ;
[Fig. 2] la figure 2 est une vue en perspective, en regard d'une deuxième face du corps principal, du dispositif de support selon l'invention ;
[Fig. 3] la figure 3 est une vue en perspective d'un système de communication comprenant le dispositif de support selon l'invention, une antenne et une embase SMA, le système de communication n'étant pas assemblé ;
[Fig. 4] la figure 4 est une vue similaire à celle de la figure 3, le système de communication comprenant de plus un câble et étant assemblé ;
[Fig. 5] la figure 5 est une vue en perspective du système de communication monté sur un rail DIN ;
[Fig. 6] la figure 6 est une vue en coupe du dispositif de support selon l'invention monté sur le rail DIN ;
[Fig. 7] la figure 7 est une vue en perspective, de face, d'un coffret d'armoire intégrant un concentrateur de données, et du système de communication ;
[Fig. 8] la figure 8 est une vue en perspective du système de communication monté dans le coffret d'armoire, la vue étant coupée selon un plan transversal du coffret passant par une encoche préexistante ;
[Fig. 9] la figure 9 est une vue en perspective de deux coffrets d'armoire fixés l'un à l'autre, la vue étant coupée selon un plan transversal des coffrets d'armoire passant par des encoches préexistantes.

### DESCRIPTION DETAILLEE DE L'INVENTION

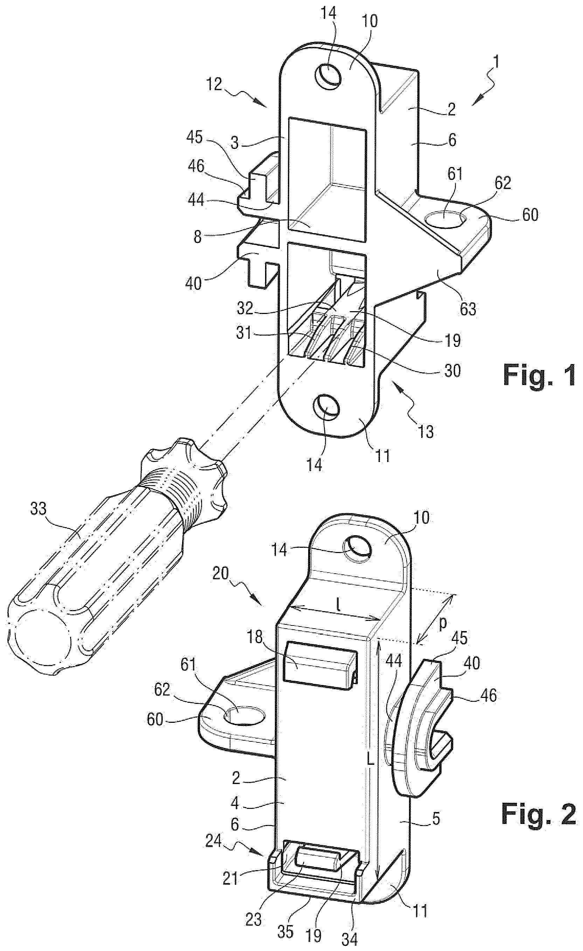

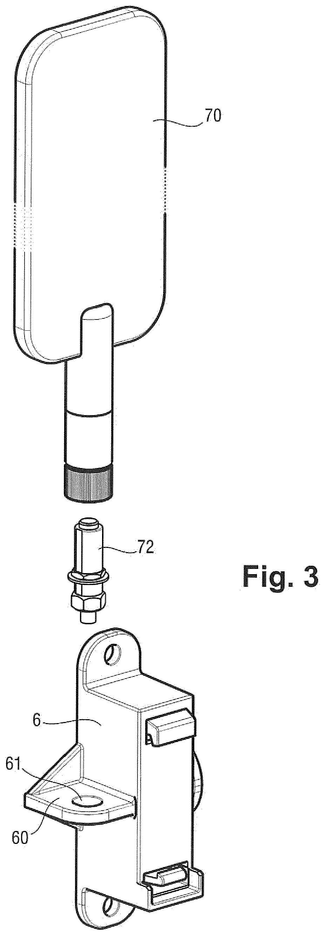

En référence aux figures 1 à 4, on décrit tout d'abord le dispositif de support selon l'invention 1.

Le dispositif de support selon l'invention 1 est ici fabriqué en une matière plastique, par exemple par moulage.

Le dispositif de support 1 comporte un corps principal 2 de forme générale parallélépipédique. Le corps principal 2 comporte une première face 3, évidée presque totalement, une deuxième face 4 opposée à la première face 3, une troisième face 5 et une quatrième face 6. La troisième face 5 et la quatrième face 6 sont opposées l'une par rapport à l'autre et forment des faces latérales du corps principal 2. Le corps principal 2 présente ainsi une longueur L, une largeur 1 et une profondeur p.

Le corps principal 2 est presque entièrement creux. Il comporte une paroi interne 8 perpendiculaire à la première face 3 et à la deuxième face 4, située à mi-longueur dans le corps principal 2.

Le dispositif de support 1 comporte une pluralité de moyens de fixation de dispositif agencés chacun pour fixer le dispositif de support 1 sur un dispositif d'accueil préexistant distinct. Par « préexistant », on entend que le dispositif d'accueil n'a pas été prévu ni conçu initialement pour accueillir le dispositif de support 1.

La pluralité de moyens de fixation de dispositif comprend tout d'abord un premier moyen de fixation de dispositif qui s'étend sur ou depuis la première face 3 et qui est agencé pour fixer le dispositif de support 1 à un mur lorsque la première face 3 est positionnée contre le mur.

Le premier moyen de fixation de dispositif comporte une première patte 10 et une deuxième patte 11 de forme plate, qui s'étendent respectivement depuis une première extrémité 12 et une deuxième extrémité 13 de la première face 3 du corps principal 2. Par « extrémité », on entend ici une extrémité selon la longueur du corps principal 2.

Chaque patte 10, 11 s'étend dans le prolongement de la première face 3 du corps principal 2. Un trou de fixation 14 est pratiqué dans chaque patte 10, 11.

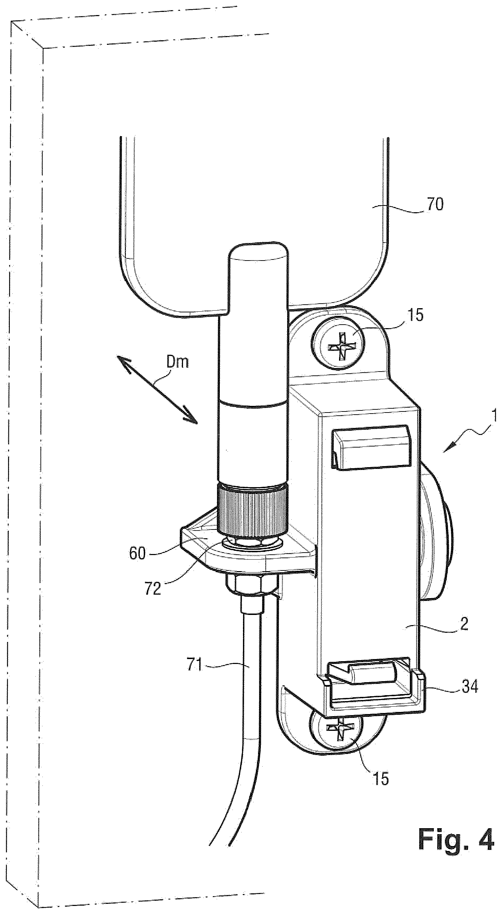

La première face 3 du corps principal 2 et les pattes 10, 11 peuvent ainsi être plaquées contre un mur, ou contre tout type de dispositif d'accueil préexistant de forme plane. Le dispositif de support 1 peut alors être fixé au mur grâce à deux vis 15 (visibles sur la figure 4) qui s'étendent chacune dans un trou de fixation 14 puis dans un taraudage pratiqué dans le mur.

La pluralité de moyens de fixation de dispositif comprend de plus un deuxième moyen de fixation de dispositif qui s'étend sur ou depuis la deuxième face 4 du corps principal 2 du dispositif de support 1.

Le deuxième moyen de fixation de dispositif comporte des moyens d'encliquetage qui comprennent un crochet 18 et une patte flexible 19.

Le crochet 18 est situé à une première extrémité 20 de la deuxième face 4 et est orienté vers le centre de la deuxième face 4.

La patte flexible 19 s'étend perpendiculairement à la deuxième face 4 depuis l'intérieur du corps principal 2, et traverse un orifice 21 pratiqué dans la deuxième face 4 pour venir déboucher au niveau de la deuxième face 4 perpendiculairement à celle-ci. La patte flexible 19 comprend un crochet 23 qui s'étend au niveau d'une deuxième extrémité 24 de la deuxième face 4, orienté vers le centre de la deuxième face 4, en regard du crochet 18.

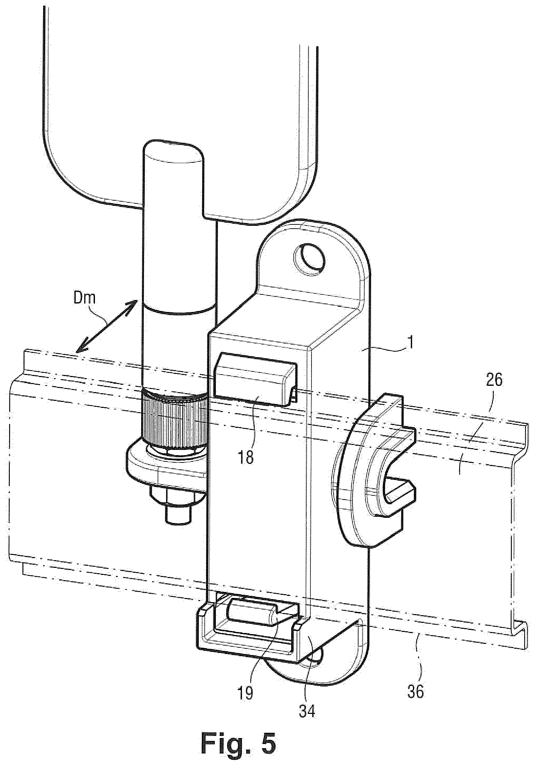

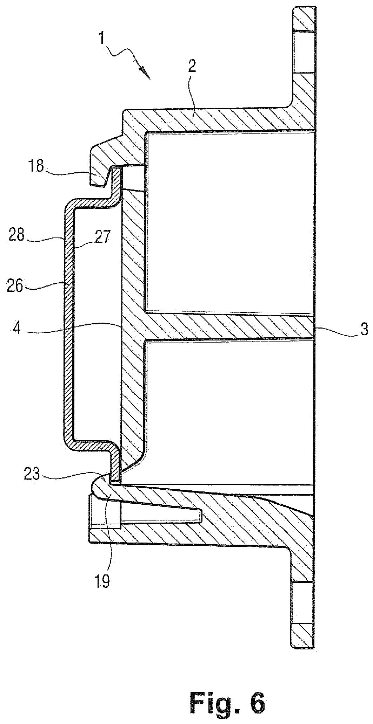

Le crochet 18 est relativement rigide, en comparaison tout au moins avec la patte flexible 19. Comme on le voit sur les figures 5 et 6, les moyens d'encliquetage permettent de fixer le dispositif de support 1 sur un rail DIN 26. Pour fixer le dispositif de support 1 sur le rail DIN 26, on amène la deuxième face 4 du corps principal 2 du dispositif de support 1 contre une première face 27 du rail DIN 26, on positionne le crochet 18 du côté de la deuxième face 28 du rail DIN 26, puis on vient encliqueter la patte flexible 19 de manière à ce que le crochet 23 de la patte flexible 19 se positionne contre la deuxième face 28 du rail DIN 26.

On remarque que des nervures 30 sont formées à l'intérieur du corps principal 2. Ces nervures 30 forment une rampe de guidage 31 qui monte depuis la deuxième extrémité 13 de la première face 3 jusqu'à une base 32 de la patte flexible 19.

La rampe de guidage 31 permet de faciliter le démontage du dispositif de support 1 lorsque celui-ci est fixé au rail DIN 26 via les moyens d'encliquetage. Un opérateur peut amener un outil longiligne quelconque, par exemple un tournevis 33, à l'intérieur du corps principal 2 via l'ouverture pratiquée dans la première face 3. La rampe de guidage 31 guide le tournevis 33 vers la patte flexible 19, de sorte que l'opérateur peut appuyer sur la patte flexible 19 et ainsi, aisément, débloquer les moyens d'encliquetage pour démonter le dispositif de support 1 du rail DIN 26.

Le deuxième moyen de fixation de dispositif comporte aussi un dispositif d'appui 34 formé par une bande qui s'étend le long des bords de la deuxième extrémité 24 de la deuxième face 4 du corps principal 2 et qui vient en saillie de la deuxième face 4, perpendiculairement à celle-ci, en prolongeant les parois de la troisième face 5, de la quatrième face 6 et d'une cinquième face 35 du corps principal 2 du dispositif de support 1.

Lorsque le dispositif de support 1 est fixé au rail DIN 26, le dispositif d'appui 34 vient en appui contre le bord inférieur 36 du rail DIN 26. Le dispositif d'appui 34 permet d'empêcher la rotation du dispositif de support 1 par rapport au rail DIN 26, mais aussi de protéger la patte flexible 19 des chocs, et de limiter la course de la patte flexible 19 pour éviter de la déformer au-delà de sa limite élastique.

On note ici que l'ouverture du corps principal 2 par la première face 3, qui permet d'avoir accès à la patte flexible 19 via cette première face 3, permet aussi, au moment de la fabrication par moulage du dispositif de support 1, de démouler plus facilement le crochet 18 et la patte flexible 19. On simplifie de la sorte la fabrication du dispositif de support 1.

La pluralité de moyens de fixation de dispositif comprend de plus un troisième moyen de fixation de dispositif qui s'étend sur ou depuis la troisième face 5 du corps principal 2 du dispositif de support 1.

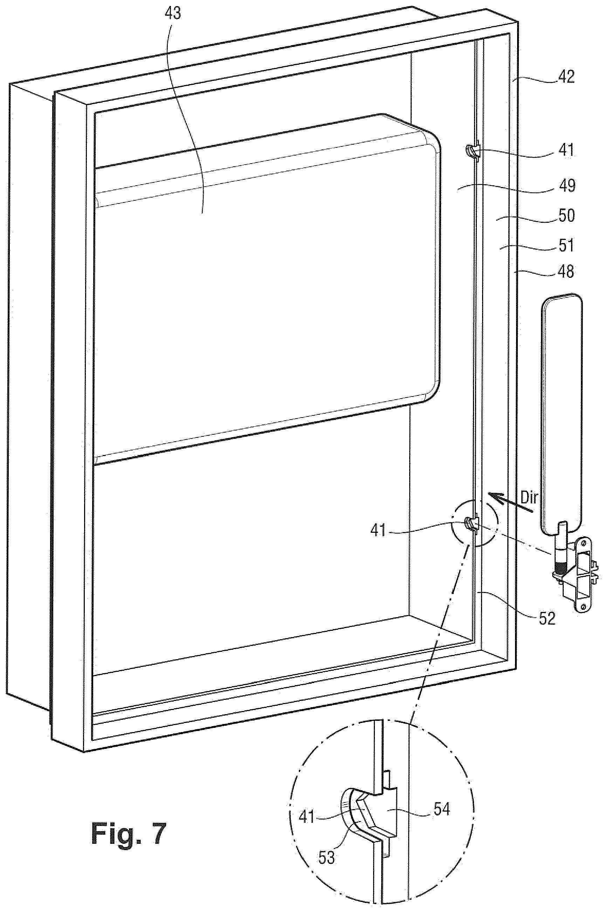

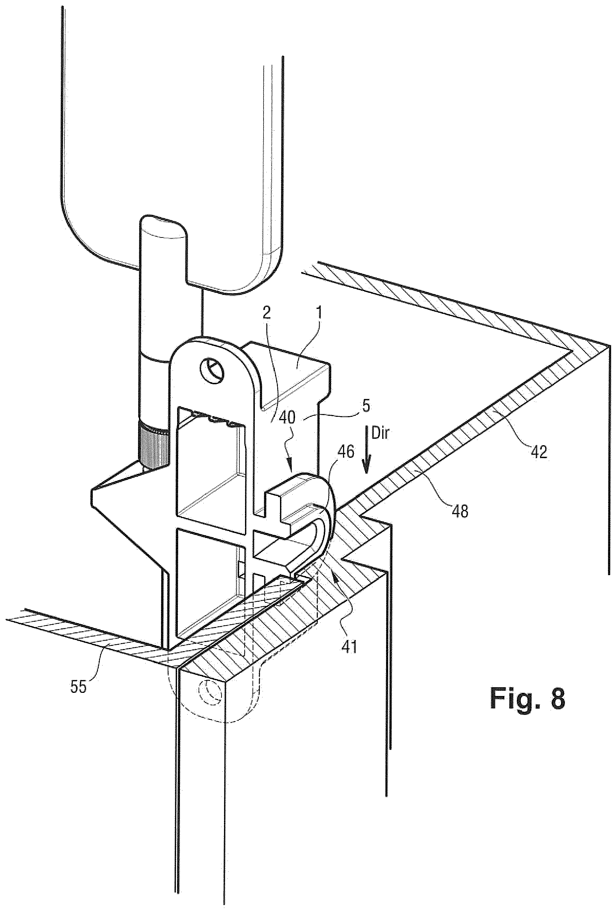

Le troisième moyen de fixation de dispositif comprend un insert 40 destiné à être introduit dans un encoche préexistante 41 d'un coffret 42, qui est ici un coffret d'armoire de rue dans lequel est intégré un concentrateur de données 43. Le coffret 42 est visible sur les figures 7 et 8.

L'insert 40 s'étend ici sur la troisième face 5 du corps principal 2 du dispositif de support 1.

L'insert 40 comporte une base 44 qui s'étend sur la troisième face 5, une plaque 45 qui s'étend sur la base 44 en étant plus large que la base 44, et une nervure 46 formée sur la plaque 45. La base 44, la plaque 45 et la nervure 46 sont positionnées successivement depuis la troisième face 5 selon un axe perpendiculaire à la troisième face 5. La base 44, la plaque 45 et la nervure 46 ont toutes trois la forme d'un fer à cheval et comprennent chacune une portion semi-circulaire et deux branches linéaires. Les extrémités libres des branches linéaires sont situées au niveau d'un bord de la troisième face 5, dans le prolongement de la première face 3 du corps principal 2, alors que les portions semi-circulaire sont orientées vers l'intérieur de la troisième face 5. On note que les portions semi-circulaires ne peuvent dépasser de la troisième face 5, car, sinon, elles empêcheraient le montage du dispositif de support 1 sur le rail DIN 26.

L'encoche préexistante 41 du coffret 42 est pratiquée dans une paroi latérale 48 du coffret 42. Cette paroi latérale 48 comprend, selon sa hauteur, une première portion 49 qui s'étend depuis un fond du coffret 42, puis une deuxième portion 50 qui s'étend depuis le haut de la première portion 49 jusqu'au bord supérieur de la paroi latérale 48. La deuxième portion 50 est légèrement décalée par rapport à la première portion 49, ce qui forme un évidement 51 en regard de l'intérieur du coffret 42, ledit évidement 51 ayant la forme d'une bande qui parcourt toutes les parois du coffret 42 parallèlement aux bords supérieurs desdites parois.

L'encoche préexistante 41 est formée dans la première portion 49 de la paroi latérale 48 et débouche dans l'évidement 51. L'encoche préexistante 41 comprend une première cavité 53 et une deuxième cavité 54 qui s'étendent successivement dans l'épaisseur de la première portion 49 de la paroi latérale 48. La première cavité 53 a une forme complémentaire de la forme de la plaque 45 de l'insert 40 du troisième moyen de fixation de dispositif, et la deuxième cavité 54 a une forme complémentaire de la forme de la nervure 46 de l'insert 40.

L'insert 40 peut donc être inséré dans l'encoche préexistante 41 selon une direction Dir parallèle à la paroi latérale 48, les portions semi-circulaires de la base 44, de la plaque 45 et de la nervure 46 de l'insert 40 pénétrant les premières dans l'encoche préexistante 41.

Lorsque l'insert 40 est introduit entièrement dans l'encoche préexistante 41, la plaque 45 et la nervure 46 s'étendent respectivement dans la première cavité 53 et dans la deuxième cavité 54 de l'encoche préexistante 41, et une portion de l'épaisseur de la paroi latérale 48 du coffret 42 s'étend entre la troisième face 5 du corps principal 2 et la plaque 45. Les extrémités libres des branches linéaires de la base 44, de la plaque 45 et de la nervure 46 de l'insert 40 affleurent au niveau du fond 52 de l'évidement 51 correspondant à la limite entre la première portion 49 et la deuxième portion 50 de la paroi latérale 48.

Lorsque l'insert 40 est positionné dans l'encoche préexistante 41, le dispositif de support 1 est maintenu en position dans le coffret 42. Le seul mouvement que peut subir le dispositif de réception 1 est un déplacement de sens opposé au sens du déplacement selon la direction Dir qui a permis d'introduire l'insert 40 dans l'encoche préexistante 41.

Le coffret 42 comporte un couvercle 55 (ou une porte) permettant de fermer le coffret 42. Pour fermer le coffret 42, on vient positionner le couvercle 55 contre le coffret 42, de sorte que les parois du couvercle 55 viennent reposer sur le fond 52 de l'évidement 51. Lorsque le couvercle 55 ferme le coffret 42, le couvercle 55 vient appuyer contre la nervure 46 de l'insert 40 (positionné dans l'encoche préexistante 41) du dispositif de support 1, et maintient ainsi le dispositif de support 1 complètement immobile dans le coffret 42 (voir la figure 8).

On note ici que la surface plane de la première face 3 permet bien sûr, d'une part, de fixer le dispositif de support 1 contre un mur (comme cela a été expliqué plus tôt), mais aussi d'accroître la stabilité du dispositif de support 1 lorsque que celui-ci est installé dans la rainure d'un coffret.

De même, la surface plane de la troisième face 5 permet d'éviter que le dispositif de support 1 ne bouge lorsque le couvercle 55 du coffret est en place.

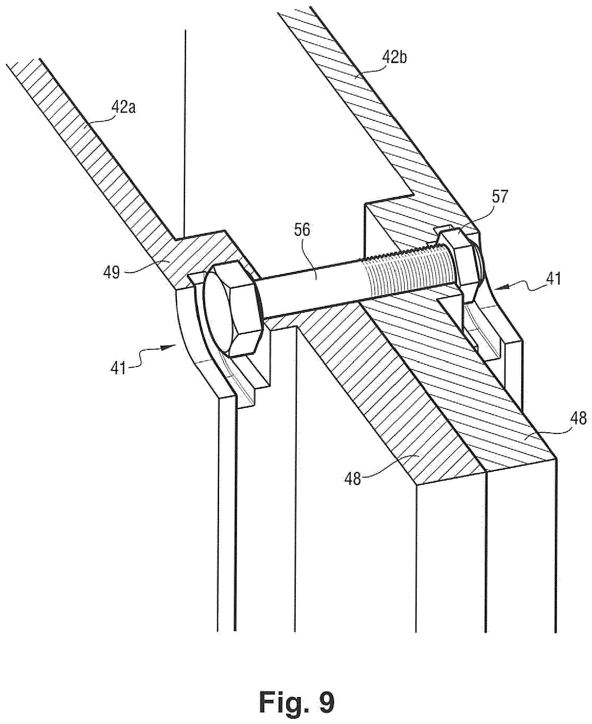

On décrit, en référence à la figure 9, le rôle initial, dans le coffret 42, des encoches préexistantes 41. Les encoches préexistantes 41 permettent de fixer entre eux un premier coffret 42a et un deuxième coffret 42b, positionnées l'un à côté de l'autre : chaque coffret 42a, 42b a ainsi une paroi latérale 48 fixée à une paroi latérale 48 de l'autre coffret 42a, 42b.

Les encoches préexistantes 41 des parois latérales 48 des coffrets 42a, 42b sont percées.

Les coffrets 42a, 42b sont ensuite fixés entre eux via des vis 56 et des écrous 57. La tête de chaque vis 56 est positionnée dans une encoche préexistante 41 du premier coffret 41a, ladite vis 56 coopérant avec un écrou 57 positionné dans une encoche préexistante 41 du deuxième coffret 42b.

Ainsi, le troisième moyen de fixation de support est particulièrement astucieux, puisqu'il permet de fixer le dispositif de support 1 à une encoche préexistante 41, prévue à l'origine pour un tout autre usage.

Il est bien sûr possible d'ajouter des moyens de fixation aux trois moyens de fixation de dispositif qui viennent d'être décrits. On pourrait par exemple ajouter un adhésif double faces, ou un adhésif et un velcro, ou de la colle sur la première face 3, sur les languettes 10 et 11, (ou sur le gousset 63 qui va être décrit plus bas), etc.

Le dispositif de support 1 comporte de plus un moyen de fixation d'équipement agencé pour fixer un équipement de communication sur le dispositif de support 1.

Le moyen de fixation d'équipement comporte une languette 60 qui s'étend perpendiculairement depuis la quatrième face 6 du corps principal 2. La quatrième face 6 est opposée à la troisième face 5 et est perpendiculaire à la première face 3 et à la deuxième face 4.

La languette 60 comprend un trou de support 61 dans lequel peut être inséré un connecteur de l'équipement de communication. Un méplat 62 est aménagé dans le trou de support 61.

On note que qu'un gousset de renfort 63, triangulaire, s'étend de part et d'autre de la languette 60, parallèlement à la première face 3 et dans la continuité de la première face 3.

Le gousset de renfort 63 permet bien sûr de renforcer la languette 60 qui peut ainsi porter un équipement de communication relativement lourd. Le gousset de renfort 63 augmente par ailleurs la surface de la première face 3 et donc la stabilité et la robustesse de la fixation du dispositif de support 1 lorsqu'il est monté contre un mur et fixé grâce au premier moyen de fixation de dispositif.

L'équipement de communication est ici une antenne 70. L'antenne 70 est reliée à un câble 71 via un connecteur qui est en l'occurrence une embase SMA 72. L'embase SMA 72 est insérée dans le trou de support 61 et est fixée à la languette 60. Le méplat 62 permet de bloquer l'embase SMA 72 en rotation. Lorsque l'antenne 70 est ainsi fixée au dispositif de support 1, l'antenne 70 s'étend dans sa longueur parallèlement à une longueur de la quatrième face 6 du corps principal 2 du dispositif de support 1.

On note que ce moyen de support d'équipement permet de positionner l'antenne 70 selon deux positions à 180° l'une de l'autre. Par exemple, lorsque le dispositif de support 1 est fixé comme sur la figure 4, l'antenne 70 peut être orientée vers le haut, comme c'est le cas sur la figure 4, ou bien vers le bas. Cette possibilité est particulièrement pratique et facilite l'intégration de l'antenne 70 dans son environnement opérationnel.

On décrit maintenant les autres avantages de l'invention.

Le dispositif de support 1 comporte donc une pluralité de moyens de fixation de dispositif, qui permettent de fixer le dispositif de support 1 et donc l'antenne 70 sur différents dispositifs d'accueil préexistants : mur, rail DIN 26, encoche 41 du coffret 42, etc.

On peut donc fixer le dispositif de support 1 sur de multiples dispositifs d'accueil préexistants sans modifier ces dispositifs d'accueil préexistants : le coût de l'installation et sa complexité sont réduits. Ceci est particulièrement avantageux dans notre application (et dans de nombreuses autres applications).

Le concentrateur de données 43 intègre sa propre antenne. Cependant, si les communications mises en oeuvre par le concentrateur de données 43 sont mauvaises, il peut être nécessaire d'augmenter la force du signal en utilisant une antenne additionnelle, c'est-à-dire l'antenne 70. On peut très facilement intégrer l'antenne 70 dans le coffret 42 contenant le concentrateur de données 43, grâce au dispositif de support 1, sans modifier le coffret 42, en utilisant l'une des quatre encoches préexistantes 41 du coffret 42.

Imaginons maintenant que le coffret 42 soit situé dans un endroit très défavorable pour les communications radiofréquences, par exemple au fond d'une cave d'un immeuble. L'antenne 70 peut alors être reliée au concentrateur de données 43 mais déportée à l'extérieur du coffret 42, dans un endroit plus favorable. Le dispositif de support 1 permet alors de fixer l'antenne 70 sur un autre dispositif d'accueil préexistant, tel qu'un mur ou un rail DIN.

Lorsque le dispositif de support 1 est fixé sur un dispositif d'accueil préexistant grâce à l'un des moyens de fixation de dispositif, l'antenne 70 se trouve dans une position prédéterminée par rapport au dispositif d'accueil préexistant et est éloigné d'au moins une distance minimum prédéfinie du dispositif d'accueil préexistant. Ainsi, dans le coffret 42, l'antenne 70 se trouve à une distance minimum des parois du coffret 42. L'antenne se trouve aussi à une distance minimum des équipements du coffret 42 (notamment du concentrateur de données 43) et de toutes les surfaces à l'intérieur du coffret 42, qui sont susceptibles de perturber les communications radiofréquences, car la position de l'antenne 70 est précisément définie grâce au dispositif de support 1.

De même, lorsque l'antenne 70 est montée sur le rail DIN 26 ou sur un mur grâce au dispositif de support 1, elle est éloignée d'au moins une distance minimum Dm prédéfinie du rail DIN et du mur (voir figures 4 et 5).

On améliore ainsi les communications mises en oeuvre par l'antenne 70 en l'éloignant des surfaces pouvant faire écran.

Comme le dispositif de support 1 comprend une pluralité de moyens de fixation de dispositif, il n'est plus nécessaire de livrer aux clients un kit de plusieurs dispositifs de support adaptés chacun à un dispositif d'accueil préexistants susceptible d'accueillir l'antenne 70. On réduit ainsi le coût de la solution complète livrée aux clients.

Le dispositif de support 1 permet de plus de livrer aux clients une solution « clé en main » comprenant l'antenne 70, l'embase SMA 72 et le câble 71, tous ces éléments étant assemblés. L'installation de l'antenne 70 est donc facilitée pour le client et peut être faite plus rapidement.

Le dispositif de support 1 permet aussi de limiter le risque d'une dégradation des performances radiofréquences résultant d'une mauvaise installation, par exemple d'un couple de serrage de l'antenne 70 ou de l'embase SMA 72 non respecté.

En effet, comme le client n'a pas besoin de sélectionner un dispositif de support adapté à son besoin parmi une pluralité de dispositifs de support disponibles, le système de communication comprenant l'antenne 70, le câble 71, l'embase SMA 72 et le dispositif de support 1 peut être assemblé puis testé en usine avant la livraison du système. Comme le client n'a pas besoin de démonter ce système, même s'il le change de place, les performances radio testées et garanties en usine ne peuvent pas être dégradées suite à l'installation réalisée par le client. Le risque de perte de performance radio du fait d'un mauvais assemblage par le client est éliminé par cette invention.

Bien entendu, l'invention n'est pas limitée au mode de réalisation décrit mais englobe toute variante entrant dans le champ de l'invention telle que définie par les revendications.

L'équipement de communication n'est pas nécessairement une antenne, mais peut être tout type d'équipement susceptible d'être utilisé pour communiquer, par exemple une fibre optique.

On a décrit ici que l'antenne, fixée au dispositif de support, est reliée à un concentrateur de données. Le dispositif de support peut cependant être intégré dans tout type d'équipement électrique (compteur électrique, équipement industriel, équipement de télécommunication, station de base radio d'un système d'information, etc.), et porter un équipement de communication relié à tout type d'équipement électrique.

## Revendications

1. Dispositif de support d'un équipement de communication (70), comportant un moyen de fixation d'équipement (60) agencé pour fixer l'équipement de communication sur le dispositif de support (1), le dispositif **caractérisé en ce qu'**il comprend une pluralité de moyens de fixation de dispositif (10, 11, 14, 18, 19, 40) agencés chacun pour fixer le dispositif de support (1) sur un dispositif d'accueil préexistant (26) distinct, le moyen de fixation d'équipement et les moyens de fixation de dispositif étant agencés de sorte que, lorsque l'équipement de communication est fixé sur le dispositif de support (1) grâce au moyen de fixation d'équipement et que le dispositif de support (1) est fixé sur un dispositif d'accueil préexistant grâce à l'un des moyens de fixation de dispositif, l'équipement de communication (70) est éloigné d'au moins une distance minimum prédéfinie (Dm) du dispositif d'accueil préexistant.

2. Dispositif de support selon la revendication 1, l'équipement de communication étant une antenne (70).

3. Dispositif de support selon l'une des revendications précédentes, comportant un corps principal (2) de forme générale parallélépipédique qui comprend une première face (3) et une deuxième face (4) opposée à la première face (3), le dispositif de support (1) comportant un premier moyen de fixation de dispositif qui s'étend sur ou depuis la première face (3) et qui est agencé pour fixer le dispositif de support à un mur lorsque la première face est positionnée contre le mur, et un deuxième moyen de fixation de dispositif qui s'étend sur ou depuis la deuxième face (4).

4. Dispositif de support selon la revendication 3, dans lequel le premier moyen de fixation de dispositif comporte deux pattes (10, 11) qui s'étendent chacune depuis une extrémité distincte de la première face du corps principal (2), un trou de fixation (14) étant pratiqué dans chaque patte.

5. Dispositif de support selon la revendication 3, dans lequel le deuxième moyen de fixation de dispositif comporte des moyens d'encliquetage (18, 19) agencés pour fixer le dispositif de support à un rail DIN (26).

6. Dispositif de support selon la revendication 3, comportant en outre un troisième moyen de fixation de dispositif comprenant un insert (40) qui s'étend sur ou depuis une troisième face (5) du corps principal (2), la troisième face étant perpendiculaire à la première face (3) et à la deuxième face (4), l'insert étant agencé pour être introduit dans un encoche préexistante (41) pratiquée dans une paroi (48) d'un coffret (42).

7. Dispositif de support selon la revendication 6, dans lequel l'insert (40) comporte une base (44) qui s'étend sur la troisième face, une plaque (45) positionnée sur la base (44) en étant plus large que la base, et une nervure (46) formée sur la plaque (45), l'insert (40) étant agencé de sorte que, lorsque le dispositif de support (1) est fixé au coffret (42) par le troisième moyen de fixation de dispositif, la plaque et la nervure s'étendent respectivement dans une premier cavité (53) et une deuxième cavité (54) de l'encoche préexistante (41), et une portion de l'épaisseur de la paroi du coffret (42) s'étend entre la troisième face (5) du corps principal et la plaque (45).

8. Dispositif de support selon la revendication 3, dans lequel le moyen de fixation d'équipement comporte une languette (60) qui s'étend perpendiculairement depuis une quatrième face (6) du corps principal (2), la quatrième face étant perpendiculaire à la première face (3) et à la deuxième face (4), la languette (60) comprenant un trou de support (61) dans lequel peut être inséré un connecteur (72) connecté à l'équipement de communication (70).

9. Dispositif de support selon la revendication 8, dans lequel un méplat (62) est aménagé dans le trou de support (61), le méplat étant agencé pour bloquer le connecteur en rotation.

10. Système de communication comprenant un dispositif de support (1) selon l'une des revendications précédentes et un équipement de communication (70) supporté par ledit dispositif,

11. Système de communication selon la revendication 10, comprenant un dispositif de support selon la revendication 8, l'équipement de communication étant une antenne (70), le système de communication comprenant en outre un câble (71) et un connecteur (72), l'antenne (70) étant connectée au câble (71) par le connecteur (72), le connecteur étant inséré dans le trou de support (61) de la languette (60) et étant fixé à la languette (60).

12. Système de communication selon la revendication 11, dans lequel l'antenne (70) s'étend dans sa longueur parallèlement à la quatrième face (6) du corps principal (2) .

13. Equipement électrique comprenant un système de communication selon l'une des revendications 11 ou 12.

14. Equipement électrique selon la revendication 13, l'équipement électrique comprenant un coffret d'armoire (42) dans lequel est intégré un concentrateur de données (43) agencé pour communiquer avec un compteur électrique.

15. Equipement électrique selon la revendication 13, l'équipement électrique étant un compteur électrique.

16. Procédé d'installation d'un équipement de communication sur un dispositif d'accueil préexistant, comprenant les étapes de :
- Fixer l'équipement de communication au dispositif de support selon l'une des revendications 1 à 9, en utilisant le moyen de fixation d'équipement du dispositif de support ;
- Fixer le dispositif de support au dispositif d'accueil préexistant, en utilisant l'un des moyens de fixation de dispositif du dispositif de support.

## Patentansprüche

1. Halterungsvorrichtung eines Kommunikationsgeräts (70), welche ein Gerätebefestigungsmittel (60) enthält, das dazu angeordnet ist, das Kommunikationsgerät an der Halterungsvorrichtung (1) zu befestigen, wobei die Vorrichtung **dadurch gekennzeichnet ist, dass** sie eine Mehrzahl von Vorrichtungsbefestigungsmitteln (10, 11, 14, 18, 19, 40) umfasst, die jeweils dazu angeordnet sind, die Halterungsvorrichtung (1) an einer separaten, bereits vorhandenen Aufnahmevorrichtung (26) zu befestigen, wobei das Gerätebefestigungsmittel und die Vorrichtungsbefestigungsmittel derart angeordnet sind, dass, wenn das Kommunikationsgerät dank dem Gerätebefestigungsmittel an der Halterungsvorrichtung (1) befestigt ist und die Halterungsvorrichtung (1) dank einem der Vorrichtungsbefestigungsmittel an einer bereits vorhandenen Aufnahmevorrichtung befestigt ist, das Kommunikationsgerät (70) um zumindest eine vorbestimmte Mindestdistanz (Dm) von der bereits vorhandenen Aufnahmevorrichtung beabstandet ist.

2. Halterungsvorrichtung nach Anspruch 1, wobei es sich bei dem Kommunikationsgerät um eine Antenne (70) handelt.

3. Halterungsvorrichtung nach einem der vorhergehenden Ansprüche, welche einen im Allgemeinen quaderförmigen Hauptkörper (2) enthält, der eine erste Fläche (3) und eine der ersten Fläche (3) gegenüberliegende zweite Fläche (4) umfasst, wobei die Halterungsvorrichtung (1) enthält: ein erstes Vorrichtungsbefestigungsmittel, das sich über die erste Fläche (3) bzw. von dieser weg erstreckt und das dazu angeordnet ist, die Halterungsvorrichtung an einer Wand zu befestigen, wenn die erste Fläche gegen die Wand positioniert ist, und ein zweites Vorrichtungsbefestigungsmittel, das sich über die zweite Fläche (4) oder von dieser weg erstreckt.

4. Halterungsvorrichtung nach Anspruch 3, wobei das erste Vorrichtungsbefestigungsmittel zwei Flansche (10, 11) enthält, die sich jeweils von einem unterschiedlichen Ende der ersten Fläche des Hauptkörpers (2) weg erstrecken wobei in jedem Flansch eine Befestigungsbohrung (14) angebracht ist.

5. Halterungsvorrichtung nach Anspruch 3, wobei das zweite Vorrichtungsbefestigungsmittel Einrastmittel (18, 19) enthält, die dazu angeordnet sind, die Halterungsvorrichtung an einer DIN-Schiene (26) zu befestigen.

6. Halterungsvorrichtung nach Anspruch 3, welche ferner ein drittes Vorrichtungsbefestigungsmittel enthält, das einen Einsatz (40) umfasst, der sich über eine dritte Fläche (5) des Hauptkörpers (2) bzw. von dieser weg erstreckt, wobei die dritte Fläche senkrecht zu der ersten Fläche (3) und zu der zweiten Fläche (4) verläuft, wobei der Einsatz dazu angeordnet ist, in eine bereits vorhandene Einkerbung (41) einer Wand (48) eines Gehäuses (42) eingesetzt zu werden.

7. Halterungsvorrichtung nach Anspruch 6, wobei der Einsatz (40) eine sich über die dritte Fläche erstreckende Basis (44), eine auf der Basis (44) positionierte und breiter ist als die Basis ausgebildete Platte (45) und eine an der Platte (45) angeformte Rippe (46) enthält, wobei der Einsatz (40) derart angeordnet ist, dass, wenn die Halterungsvorrichtung (1) durch das dritte Vorrichtungsbefestigungsmittel an dem Gehäuse (42) befestigt ist, die Platte und die Rippe sich jeweils in einen ersten Hohlraum (53) und in einen zweiten Hohlraum (54) der bereits vorhandenen Einkerbung (41) hinein erstrecken, und ein Abschnitt der Wanddicke des Gehäuses (42) sich zwischen der dritten Fläche (5) des Hauptkörpers und der Platte (45) erstreckt.

8. Halterungsvorrichtung nach Anspruch 3, wobei das Gerätebefestigungsmittel eine Lasche (60) enthält, die sich senkrecht von einer vierten Fläche (6) des Hauptkörpers (2) erstreckt, wobei die vierte Fläche senkrecht zu der ersten Fläche (3) und zu der zweiten Fläche (4) verläuft, wobei die Lasche (60) eine Trägerbohrung (61) umfasst, in welche ein an das Kommunikationsgerät (70) angeschlossener Verbinder (72) eingesetzt werden kann.

9. Halterungsvorrichtung nach Anspruch 8, wobei in der Trägerbohrung (61) ein Steg (62) ausgebildet ist, wobei der Steg dazu angeordnet ist, den Verbinder verdrehgesichert zu blockieren.

10. Kommunikationssystem, welches eine Halterungsvorrichtung (1) nach einem der vorhergehenden Ansprüche und ein von der Halterungsvorrichtung in Position gehaltenes Kommunikationsgerät (70) umfasst.

11. Kommunikationssystem nach dem Anspruch 10, welches eine Halterungsvorrichtung nach Anspruch 8 umfasst, wobei es sich bei dem Kommunikationsgerät um eine Antenne (70) handelt, wobei das Kommunikationssystem ferner ein Kabel (71) und einen Verbinder (72) umfasst, wobei die Antenne (70) durch den Verbinder (72) an das Kabel (71) angeschlossen ist, wobei der Verbinder in die Trägerbohrung (61) der Lasche (60) eingesetzt und an der Lasche (60) befestigt ist.

12. Kommunikationssystem nach Anspruch 11, wobei sich die Antenne (70) in ihrer Längserstreckung parallel zu der vierten Fläche (6) des Hauptkörpers (2) erstreckt.

13. Elektrisches Gerät, welches ein Kommunikationssystem nach einem der Ansprüche 11 oder 12 umfasst.

14. Elektrisches Gerät nach Anspruch 13, wobei das elektrische Gerät ein Schrankgehäuse (42) umfasst, in welchem ein Datenkonzentrator (43) integriert ist, der dazu angeordnet ist, mit einem Stromzähler zu kommunizieren.

15. Elektrisches Gerät nach Anspruch 13, wobei es sich bei dem elektrischen Gerät um einen Stromzähler handelt.

16. Verfahren zur Installation eines Kommunikationsgeräts an einer bereits vorhandenen Aufnahmevorrichtung, welches die Schritte umfasst, dass:
- das Kommunikationsgerät unter Verwendung des Gerätebefestigungsmittels der Halterungsvorrichtung an der Halterungsvorrichtung nach einem der Ansprüche 1 bis 9 befestigt wird;
- die Halterungsvorrichtung unter Verwendung von einem der Vorrichtungsbefestigungsmittel der Halterungsvorrichtung an der bereits vorhandenen Aufnahmevorrichtung befestigt wird.

## Claims

1. Device for supporting a communication equipment (70), comprising equipment fixing means (60) arranged to fix the communication equipment to the support device (1), the device being **characterised in that** it comprises a plurality of device fixing means (10, 11, 14, 18, 19, 40) each arranged to fix the support device (1) to a separate pre-existing docking device (26), the equipment fixing means and the device fixing means being arranged in such a manner that, when the communication equipment is fixed to the support device (1) by means of the equipment fixing means and the support device (1) is fixed to a pre-existing docking device by means of one of the device fixing means, the communication equipment (70) is at least a predefined minimum distance (Dm) away from the pre-existing docking device.

2. Support device according to claim 1, wherein the communication equipment is an antenna (70).

3. Support device according to any one of the preceding claims, comprising a main body (2) of generally parallelepipedal shape that comprises a first face (3) and a second face (4) opposite the first face (3), the support device (1) comprising a first device fixing means that extend on or from the first face (3) and that are arranged to fix the support device to a wall when the first face is positioned against the wall, and second device fixing means that extend on or from the second face (4).

4. Support device according to claim 3, wherein the first device fixing means comprises two lugs (10, 11) which each extend from a distinct end of the first face of the main body (2), a fixing hole (14) being arranged in each lug.

5. Support device according to claim 3, wherein the second device fixing means comprises snap fastener means (18, 19) arranged to fix the support device to a DIN rail (26).

6. Support device according to claim 3, further comprising a third device fixing means comprising an insert (40) that extends on or from a third face (5) of the main body (2), the third face being perpendicular to the first face (3) and to the second face (4), the insert being arranged to be inserted into a pre-existing notch (41) arranged in a wall (48) of a box (42).

7. Support device according to claim 6, wherein the insert (40) comprises a base (44) that extends over the third face, a plate (45) positioned on the base (44) being wider than the base, and a rib (46) formed on the plate (45), the insert (40) being arranged in such a manner that, when the support device (1) is fastened to the box (42) by the third device fixing means, the plate and the rib extend respectively into a first cavity (53) and a second cavity (54) of the pre-existing notch (41), and a portion of the thickness of the wall of the box (42) extends between the third face (5) of the main body and the plate (45).

8. Support device according to claim 3, wherein the equipment fixing means comprises a tab (60) that extends perpendicularly from a fourth face (6) of the main body (2), the fourth face being perpendicular to the first face (3) and to the second face (4), the tab (60) comprising a support hole (61) into which a connector (72) connected to the communication equipment (70) can be inserted.

9. Support device according to claim 8, wherein a flat (62) is provided in the support hole (61), the flat being arranged to lock the connector against rotation.

10. Communication system comprising a support device (1) according to any one of the preceding claims and a communication equipment (70) supported by said device.

11. Communication system according to claim 10, comprising a support device according to claim 8, the communication equipment being an antenna (70), the communication system further comprising a cable (71) and a connector (72), the antenna (70) being connected to the cable (71) by the connector (72), the connector being inserted into the support hole (61) of the tab (60) and being fixed to the tab (60).

12. Communication system according to claim 11, wherein the antenna (70) extends along its length parallel to the fourth face (6) of the main body (2).

13. Electrical equipment comprising a communication system according to any one of claims 11 or 12.

14. Electrical equipment according to claim 13, the electrical equipment comprising a cabinet box (42) in which is integrated a data concentrator (43) arranged to communicate with an electricity meter.

15. Electrical equipment according to claim 13, the electrical equipment being an electricity meter.

16. Method of installing communication equipment on a pre-existing docking device, comprising the steps of:
- fix the communication equipment to the support device according to any one of claims 1 to 9, using the equipment fixing means of the support device;
- fix the support device to the pre-existing docking device, using one of the device fixing means of the support device.
